# EUROPEAN PATENT APPLICATION

(11) **EP 1 710 069 A2**
(43) Date of publication of application: **11.10.2006**
(21) Application number: 06075805.9
(22) Date of filing: 04.04.2006
(51) Int. Cl.: B29C 45/16, B65D 1/24, G09F 3/00

(54) **In-mould label protection**

(30) Priority: 04.04.2005 EP 05075784
(71) Applicant: D.W. PLASTICS N.V., 3740 Bilzen (BE)
(72) Inventor: Isenborghs, Francis, 1350 Jauche (BE)
(74) Representative: Beitsma, Gerhard Romano

(57) **Abstract**

A plastic crate, such as a bottle crate, may have an in-moulded label (13) which is protected by an over-moulded protection element (11), such as a frame extending from a side wall (10). To ensure a good bonding of the over-moulded protection element (11) and the in-moulded label (13), the edges of the in-moulded label are not printed and are preferably not provided with a print layer (15). In addition, the base film (14) of the in-moulded label may be coloured to ensure a smooth colour transition between the in-moulded label and the over-moulded element. Thus any visual gaps between the over-moulded element (11) and the in-moulded label (13) are avoided.

## Description

The present invention relates to in-mould label protection. More in particular, the present invention relates to a plastic crate provided with an in-mould label (IML), the crate further being provided with a protection element for protecting the IML.

Plastic crates, such as bottle crates, may be provided with in-mould labels, that is, labels which are placed in the mould prior to injection moulding the actual crate. Such labels are relatively easily damaged. For this reason a raised area, element or ridge may be provided on the crate. As this raised element extends beyond the surface(s) of the crate on which the IML is applied, the label is far less likely to be damaged. This is in particular useful in positions of the surface(s) where the IML has decorations.

To create a raised element, the so-called over-moulding technique may be applied. In this technique, a plastic crate is first injection moulded (including the application of the IML) and then other elements are moulded onto the crate, typically using another (second) mould. The element(s) applied during the over-moulding process may consist of a material different from the crate material, for example softer material to make the handling more comfortable of the container, or to increase the friction between containers. Alternatively, or additionally, the over-moulded material may have a different colour.

When a protective frame or other protective element (such as, for example, a handle area) is applied near or around an IML (or IML decoration), it is highly desirable to match the colours of the protective area and the IML. Typically, the colour of the crate differs from the IML colour and for this reason, the crate itself should not show between the IML and the protective element. However, to allow for tolerances, a small gap is conventionally used between the protective element and the IML. The protective element and the IML should not overlap, as there would be insufficient adhesion between the IML and the protective (over-moulded) element, possibly resulting in the over-moulded element coming loose or being stripped off.

In practice, therefore, a small gap between the IML and the protective element is always visible. Due to the tolerances involved, the size (width) of this gap is very difficult to control. As a consequence, the gap will be visible as a small border around the IML and may vary considerably between crates. It will be clear that this is highly undesirable.

It is an object of the present invention to overcome these and other problems of the Prior Art and to provide a crate provided with an IML and a protective element, where there is no gap between the IML and the protective element.

Accordingly, the present invention provides a plastic crate in which the edge of the IML, in particular adjacent the protective element, is free from any printing. More in particular, the present invention provides a plastic crate comprising a base and at least two side walls, at least one of the side walls being provided with an in-mould label and an over-moulded protection element projecting above the surface of the side wall, characterised in that the in-mould label has at least one unprinted edge which extends at least as far as the protection element.

The present inventor has found that the top layer of an IML prevents the bonding with any overlapping protective element. If the IML consists of a sandwich (laminate) structure consisting of a base film on which a print film is applied, then the present invention proposes to omit the print film from the edges of the IML, at least those edges at or near the protective element (or frame), and/or to extend the base film. The print film may be omitted over a distance of a few mm, preferably 5 to 10 mm, although 2 mm is also possible. Alternatively, the edges of the print film may be left unused, that is, not printed.

By leaving the edges of the IML free from printing (or print layer), a much better bonding between the IML and the over-moulded material is made possible and consequently the over-moulded material may (partially) overlap the edges of the IML. In this way, the problems of the Prior Art are solved.

To provide matching colours and to avoid the crate colour to show, the base film of the IML is preferably coloured (instead of blanc or white). The colour of the base film could be chosen to match the colour of the printing on the IML near the edges, or to match the colour of the over-moulded material. In either case the transition of the colours between the IML and the over-moulded material would be smoothened.

It will be understood that the feature "coloured base film" may be used independently of the feature "print-free IML edges", but is preferably used jointly. In addition, the feature "coloured base film" may be used independently of the feature "overlapping over-moulded (protective) element", but is preferably used jointly.

The present invention also provides an IML for use in the crate as defmed above, as well as a method of producing a plastic crate provided with an in-mould label, the method comprising the step of applying a protection element onto a side wall using an overmoulding technique, wherein the in-mould label has at least one unprinted edge which extends at least as far as the protection element.

The present invention additionally provides a device for producing a crate as defmed above, the device being capable of producing a crate having an in-mould label and then applying a protection element by overmoulding.

The present invention will further be explained below with reference to exemplary embodiments illustrated in the accompanying drawings, in which:
Fig. 1 schematically shows, in plan view, part of a crate wall according to the Prior Art.
Fig. 2 schematically shows, in cross-section, part of a crate wall according to the Prior Art.
Fig. 3 schematically shows, in cross-section, part of a crate wall according to the present invention.

A plastic crate, such as a bottle crate, typically comprises a base and four side walls extending from the base, although crates having only two side walls are also feasible. An in-mould label may be applied on at least one of the side walls by placing the label in the mould prior to moulding the crate.

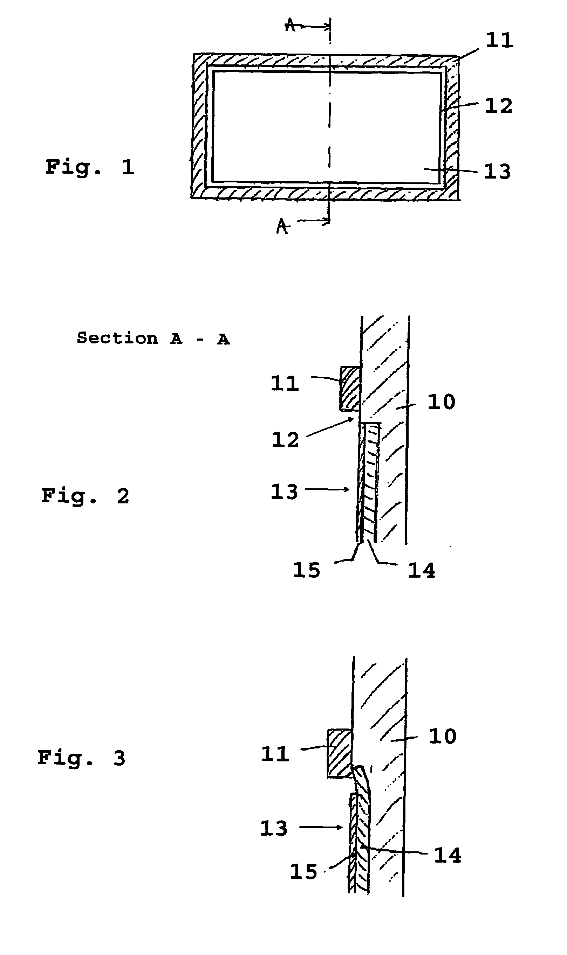

The partial crate wall according to the Prior Art and shown in Fig. 1 is provided with an IML decoration 13 and a protective structure 11. This protective structure 11, which in the embodiment shown constitutes a frame surrounding the IML 13, is an over-moulded element. This protective structure 11 is moulded onto the crate wall after injection moulding the crate, and is preferably made of a relatively soft material, such as SEBS (styrene ethylene butadyene styrene) or any other suitable "soft-touch" material. However, the protective structure 11 may also be made of the same material as the wall 10 of the crate.

To avoid any bonding problems, a gap 12 is left between the IML 13 and the frame 11. Through this gap 12, the underlying crate wall is visible, giving rise to a colour transition from IML via crate wall to frame.

The cross-section (line A - A) of Fig. 2 shows this known arrangement in more detail. The over-moulded frame 11 is applied on the crate wall 10. The IMI, is shown to consist of a base film 14 and a print film (or layer) 15. A gap 12 remains between the IML (14, 15) and the frame 11, showing the crate wall 10. The IML is shown to be recessed in the crate wall 10.

The cross-section of Fig. 3 shows a merely exemplary crate wall according to the present invention. The wall 10 is also provided with a frame 11 and an IML 14, 15 which is, in the example shown, recessed in the crate wall. In contrast to Fig. 2, the base film 14 extends further than the print film 15. In fact, the base film 14 extends even underneath the over-moulded frame 11. Any gap between the frame 11 and the print film 15 shows the base film 14, not the crate wall 10. By choosing a colour of the base film that matches the IML and/or the frame, any undesired colour transitions are avoided.

It is noted that in the embodiment of Fig. 3 the recess in the crate wall 10 is shaped such that the base film 14 bends towards the frame 11. This ensures that the frame 11 firmly holds the IML base layer 14 in the recess. It is noted that the recess is not essential and may be omitted. Similarly, the particular depth of the recess is not essential. It is further noted that the protective structure or frame 11 may be made of a relative soft material, but may also be made of the same material as the wall 10.

Accordingly, in the crate of the present invention a double colour system may be applied, using a background colour in the IML base film and another colour in the IML, print film. The IML, base film is extended to realise an unprinted edge around the decorative area of the IML to obtain an unprinted border. The over-moulded protective frame overlaps the edge of the IML.

In a crate of the present invention, the colour of the crate can be chosen independently of the desired colour in the area between the protective element (frame) and the IML decoration without the need to use the so-called 2K injection process, where two materials are injection moulded simultaneously.

The present invention is based upon the insight that the bonding between an in-mould label and an over-moulded element may be significantly enhanced by leaving out any printing from the IML edges overlapped by the over-moulded element. The present invention benefits from the further insights that the print layer of the IML may be omitted from its edges, and that the base layer of the IML may be coloured to match the IML or the over-moulded element, or both.

It will be understood by those skilled in the art that the present invention is not limited to the embodiments illustrated above and that many modifications and additions may be made without departing from the scope of the invention as defined in the appending claims.

## Claims

1. A plastic crate comprising a base and at least two side walls, at least one of the side walls (10) being provided with an in-mould label (13) and an over-moulded protection element (11) projecting above the surface of the side wall, **characterised in that** the in-mould label (13) has at least one unprinted edge which extends at least as far as the protection element (11).

2. The plastic crate according to claim 1, wherein the in-mould label (13) is provided with a print layer (15) which leaves at least one edge free.

3. The plastic crate according to claim 1 or 2, wherein the in-mould label (13) has a base film (14) of which at least one edge is coloured.

4. The plastic crate according to claim 1, 2 or 3, wherein the in-mould label (13) extends underneath the protection element (11).

5. The plastic crate according to any of the preceding claims, wherein the protection element (11) constitutes a frame around the in-mould label (13).

6. The plastic crate according to any of the preceding claims, wherein the protection element (11) is made of a relatively soft material.

7. The plastic crate according to any of claims 1-5, wherein the protection element (11) is made of the same material as the side wall (10).

8. An in-mould label (13) for use in a plastic crate as defined above, the label having unprinted edges which are preferably coloured.

9. A device for producing a plastic crate provided with an in-mould label (13) according to any of claims 1-7.

10. A method of producing a plastic crate provided with an in-mould label (13), the method comprising the step of applying a protection element (11) onto a side wall (10) using an overmoulding technique, wherein the in-mould label (13) has at least one unprinted edge which extends at least as far as the protection element (11).
